# EUROPÄISCHE PATENTSCHRIFT

(11) **EP 2 797 778 B1**
(45) Veröffentlichungstag und Bekanntmachung des Hinweises auf die Patenterteilung: **09.12.2015**
(21) Anmeldenummer: 12810214.2
(22) Anmeldetag: 18.12.2012
(51) Int. Cl.: B60R 22/34, B60R 22/38, B60R 22/41

(54) **SELBSTSPERRENDER GURTAUFROLLER MIT EINER IN AUFWICKELRICHTUNG DER GURTWELLE WIRKSAMEN ENTKLAPPERUNG DES SPERRGLIEDES**
SELF-LOCKING BELT RETRACTOR WITH ANTI-RATTLE ACTION ON ITS BELT-STRAP-SENSITIVE CONTROL SYSTEM THAT IS EFFECTIVE IN THE WINDING DIRECTION OF THE BELT SHAFT
ENROULEUR AUTOBLOQUANT POUR CEINTURE DE SÉCURITÉ, DOTÉ D'UN ÉLÉMENT DE DÉSENCLIQUETAGE DE L'ORGANE DE VERROUILLAGE AGISSANT DANS LE SENS D'ENROULEMENT DE L'ARBRE DE LA CEINTURE

(30) Priorität: 27.12.2011 DE 102011057066
(43) Veröffentlichungstag der Anmeldung: 05.11.2014
(73) Patentinhaber: Autoliv Development AB, 447 83 Vårgårda (SE)
(72) Erfinder: HEINE, Volkmar, 22589 Hamburg (DE); BOSSE, Uwe, 20255 Hamburg (DE); WEISS, Melanie, 22149 Hamburg (DE)
(74) Vertreter: Müller, Karl-Ernst
(86) Internationale Anmeldenummer: PCT/EP2012/075898
(87) Internationale Veröffentlichungsnummer: WO 2013/098118

(56) Entgegenhaltungen:
- EP-A1- 1 860 002
- WO-A1-2009/049754
- DE-B4- 10 324 195
- GB-A- 2 099 287
- US-A1- 2007 290 091
- US-A1- 2009 218 432

## Beschreibung

Die Erfindung betrifft einen selbstsperrenden Gurtaufroller für Sicherheitsgurte mit einer drehbar in einem Gehäuserahmen gelagerten und in Aufwickelrichtung des Gurtbandes von einer Aufwickelfeder vorgespannten Gurtwelle und mit wenigstens einem gurtbandsensitiven Ansteuermechanismus, der eine an die Gurtwelle gekoppelte Steuerscheibe zur Aussteuerung eines an der Gurtwelle angeordneten und bei Relativdrehung zwischen Gurtwelle und Steuerscheibe bis zum Eingriff in eine Gehäuseverzahnung gegen Federwirkung auslenkbaren Sperrgliedes aufweist und das Sperrglied mittels eines in ein in der Steuerscheibe ausgebildetes Langloch eingreifenden und darin während der Relativdrehung zwischen Steuerscheibe und Gurtwelle geführten Zapfens an die Steuerscheibe gekoppelt ist, wobei die Steuerscheibe eine exzentrisch an der Steuerscheibe schwenkbar gelagerte und gegen die Wirkung einer Rückstellfeder radial ausschwenkbare, zweiarmige Trägheitsmasse trägt, die im Auslösefall aufgrund der auf die Steuerscheibe einwirkenden Drehbeschleunigung mit ihrem einen Blockierarm radial bis zum Eingriff in eine ortsfeste Verzahnung ausschwenkt und dadurch die Steuerscheibe in deren Drehbewegung anhält und festlegt, und wobei an einer Lagerstelle für die Gurtwelle und/oder die Steuerscheibe eine zwei in Umfangsrichtung voneinander beabstandet angeordnete Federschenkel aufweisende Drehfeder mittels einer reibschlüssigen Lagerung relativ zur Steuerscheibe zwischen einer Anlagestellung an der Trägheitsmasse und einer Anlagestellung an einem von der Ebene der Steuerscheibe aufstehenden Mitnehmer drehbar gelagert ist.

Ein Gurtaufroller mit den vorgenannten Merkmalen ist einschließlich seiner die Herbeiführung der Blockierung des Gurtaufrollers durch eine mittels einer Relativdrehung zwischen Steuerscheibe und Sperrglied herbeigeführten Auslenkung eines an dem Sperrglied angeordneten und in einem in der Steuerscheibe ausgebildeten Langloch geführten Zapfens betreffenden Merkmale in der EP 1 860 002 A1 beschrieben. Die entsprechende Funktion eines derartig aufgebauten Gurtaufrollers ist zudem in der DE 103 24 195 B4 mit weiterer Bezugnahme auf die DE 29 24 575 A1 oder die DE 39 26 370 A1 im Einzelnen beschrieben.

Bei einem derartigen, mit einem gurtbandsensitiven Ansteuermechanismus versehenen Gurtaufroller kann beispielsweise das Problem auftreten, dass nach einem Ablegen des Sicherheitsgurtes die Aufwickelfeder der Gurtwelle mit einer derartigen Drehgeschwindigkeit in Aufwickelrichtung dreht, dass aufgrund des am Ende des Gurtbandeinzuges wirksamen Stopps der Drehbewegung die Gurtwelle trägheitsbedingt in Abwickelrichtung zurückfedert und durch die dadurch verursachte Drehung der Gurtwelle in Gurtauszugsrichtung auch mit einer relativ geringen Drehbeschleunigung das gurtbandsensitive Steuerungssystem aktiviert, d.h. die Trägheitsmasse in deren Eingriffsstellung mit der ortsfesten Verzahnung ausgelenkt wird. Gleiches kann geschehen, wenn der Gurtbandeinzug durch eine plötzliche Abbremsung des Fahrzeuges unterbrochen wird. Dieses Verhalten des Gurtaufrollers kann dazu führen, dass der Gurtaufroller zum weiteren Gebrauch zunächst einmal durch Zug am Gurtband entriegelt werde muss, um das Steuersystem zu entriegeln und anschließend den Gurt frei ausziehen zu können.

Bei dem in der gattungsbildenden EP 1 860 002 A1 beschriebenen Gurtaufroller ist zur Beseitigung dieses Problems die Anordnung einer auf einer Lagerstelle für die Gurtwelle und/oder die Steuerscheibe reibschlüssig und damit relativ zur Steuerscheibe angeordneten Drehfeder vorgeschlagen, die eine Ω-Form mit einem zentralen, mit Radius versehenen Lagerbereich und mit seitlich davon gegenüberliegend abstehend und im Winkel von 180 Grad zueinander gestreckt angeordneten Federschenkeln aufweist. Der eine Federschenkel wirkt dabei mit einem Ende der Trägheitsmasse zusammen, während der andere Federschenkel in Anlage an einem aus der Ebene der Steuerscheibe aufstehenden Mitnehmer ist. Die mit den unterschiedlichen Funktionszuständen des Gurtaufrollers einhergehende reibschlüssige Verdrehung der Drehfeder auf ihrer Lagerstelle wird einerseits durch das der Drehfeder eigene und auf sie einwirkende Trägheitsmoment bewirkt und andererseits durch das Zusammenwirken mit der trägheitsgesteuerten Bewegung der Trägheitsmasse. Dies kann in nachteiliger Weise zu Steuerungsproblemen bei dem Zusammenwirken der Drehfeder mit der Trägheitsmasse führen.

Ein weiteres Problem besteht darin, dass die Bewegung der Trägheitsmasse an der Steuerscheibe einerseits und des Sperrgliedzapfens in dem Langloch der Steuerscheibe andererseits zu entsprechenden Klappergeräuschen führen kann, die unerwünscht sind.

Der Erfindung liegt daher die Aufgabe zugrunde, einen selbstsperrenden Gurtaufroller mit den gattungsgemäßen Merkmalen derart weiterzubilden, dass dessen Funktionsablauf bei gleichzeitiger weitgehender Geräuschvermeidung verbessert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die beiden Federschenkel der in einer oberhalb der Trägheitsmasse und mit Abstand zur Ebene der Steuerscheibe gelegenen Ebene angeordneten Drehfeder den Mitnehmer zwischen sich einfassen und mit in die Ebene der Steuerscheibe reichenden Anschlägen übergreifen, wobei der Mitnehmer Anschlagflächen für die Federschenkel zur Mitnahme der Drehfeder bei der Drehung der Steuerscheibe sowohl in Gurtaufwickelrichtung als auch in Gurtauszugsrichtung ausgebildet derart, dass die Drehfeder bei Drehung der Steuerscheibe in Gurtauszugsrichtung die Trägheitsmasse freigibt und bei Drehung der Steuerscheibe in Gurtaufwickelrichtung die Trägheitsmasse an einem Ausschwenken hindert, und dass ferner der der Mitnahme der Drehfeder in Gurtaufwickelrichtung dienende Federschenkel mit seinem Anschlag während der Drehung der Steuerscheibe in Gurtaufwickelrichtung in den Bewegungsweg des Zapfens in dem Langloch reicht und dadurch das Sperrglied an der Gurtwelle fixiert.

Die Erfindung beruht einerseits auf dem Grundprinzip, die Trägheitsmasse unabhängig von dem auf sie einwirkenden Trägheitsmoment mittels der vorgesehenen Drehfeder an einem Ausschwenken zu hindern. Da insbesondere während des Gurtbandauszuges ein Ansprechen der Trägheitsmasse mit deren Ausschwenken ungehindert möglich sein muss, ist durch die besondere Ausbildung und Anordnung der Drehfeder im Zusammenhang mit dem Mitnehmer dafür Sorge getragen, dass sich bei einem beginnenden Gurtbandauszug die gemeinsam mit der Gurtwelle drehende Steuerscheibe zunächst um einen gewissen Drehwinkel relativ zu der aufgrund von deren reibschlüssige Lagerung stehen bleibenden Drehfeder verdreht, bis der zur Festlegung der Trägheitsmasse vorgesehene Federschenkel außerhalb des Schwenkweges der Trägheitsmasse liegt, sodass die Trägheitsmasse bei entsprechenden Drehbewegungen der Steuerscheibe frei ausschwenken kann. In dieser Freigabeposition der Drehfeder gelangt der Federschenkel in Anlage an der zugeordneten Anschlagsfläche des Mitnehmers und wird in dieser Position bei der weiteren Drehung der Steuerscheibe mitgenommen, sodass die Drehfeder die eingenommene Freigabeposition auf der Steuerscheibe beibehält. Bei einer anschließenden Drehung der Gurtwelle mit Steuerscheibe in Gurtaufwickelrichtung kommt es wiederum zu einer Relativdrehung der Steuerscheibe zu der zunächst wiederum aufgrund von deren reibschlüssige Lagerung stehen bleibenden Drehfeder, sodass sich die Trägheitsmasse bei der Drehung der Steuerscheibe mit ihrem Schwenkarm außen über das Ende des betreffenden Federschenkels schiebt, sodass der Federschenkel seine Funktion des Festlegens der Trägheitsmasse am Ende der Aufwickelbewegung übernehmen kann. In dieser wieder eingenommenen Blockierstellung der Drehfeder stößt der Mitnehmer mit einer anderen Anschlagfläche gegen den anderen Federschenkel der Drehfeder, sodass die Drehfeder in ihrer Blockierstellung jeweils bei der Drehung der Steuerscheibe mitgenommen wird und dabei ihre Blockierstellung beibehält.

Im Hinblick auf eine Vermeidung von bei der in Gurtaufwickelrichtung erfolgenden Drehung der das Sperrglied tragenden Gurtwelle einschließlich der an die Gurtwelle gekoppelten, relativ zur Gurtwelle beweglichen Steuerscheibe durch den im Langloch der Steuerscheibe liegenden Zapfen des Sperrgliedes verursachten Geräuschen sieht die Erfindung weiterhin prinzipiell vor, dass bei dieser Drehrichtung von Gurtwelle und Steuerscheibe der Zapfen in dem Langloch durch die eingesetzte Drehfeder festgelegt bzw. fixiert ist, so dass Klappergeräusche nicht auftreten können. Insofern ist die Anordnung des Langloches in der Steuerscheibe bezüglich der Lagerung der Trägheitsmasse an der Steuerscheibe so getroffen, dass die Drehfeder mit ihren beiden Federschenkeln in der Blockierstellung gleichzeitig die Trägheitsmasse festlegt und den im Langloch geführten Zapfen fixiert.

Nach einem Ausführungsbeispiel der Erfindung ist vorgesehen, dass der am Federschenkel der Drehfeder ausgebildete Anschlag aus einem an einem zur Steuerscheibe umgebogenen Abschnitt in Umfangsrichtung der Steuerscheibe abgebogenen Fixierabschnitt besteht, der während der Drehung der Steuerscheibe in Gurtaufwickelrichtung an dem die Ebene der Steuerscheibe überragenden Ende des Zapfens anliegt. Hiermit ist der Vorteil verbunden, dass die Drehfeder insgesamt als Drahtbiegeteil oder auch als aus einem entsprechenden Blech hergestelltes Stanzbiegeteil ausgebildet sein kann.

Nach einem Ausführungsbeispiel der Erfindung ist vorgesehen, dass das in der Steuerscheibe ausgebildete Langloch von einem über die Ebene der Steuerscheibe hervorstehenden umlaufenden und das die Ebene der Steuerscheibe überragende Ende des Zapfens führenden Rand umschlossen ist, dessen Höhe die Höhe des an der Steuerscheibe angeordneten Mitnehmers nicht überragt; hiermit ist die Führung des Zapfens des Sperrgliedes an der Steuerscheibe wegen der Überlappung von Zapfen und aufstehendem Rand verbessert.

Bei einer derartigen Ausbildung der Steuerscheibe ist dann gemäß einem Ausführungsbeispiel der Erfindung noch vorgesehen, dass der umgebogene Abschnitt des zur Fixierung des Sperrgliedes eingerichteten Federschenkels einschließlich des daran ausgebildeten Fixierabschnitts in den von dem das Langloch umschließenden Rand umgebenen Raum eintaucht und der Rand einen Durchbruch zum Durchbruch des freien Endes des Fixierabschnittes aufweist.

In einer zweckmäßigen Weiterbildung der Erfindung kann zur Verbesserung der Geräuschdämpfung vorgesehen sein, die Drehfeder in Form eines besonderen Bauteils dadurch auszubilden, dass der mit dem Zapfen des Sperrglieds zusammenwirkende Federschenkel von einem gesonderten, einen Bestandteil der Drehfeder bildenden Dämpferbauteil gebildet ist, welches mit einem von ihm zur Steuerscheibe hin abstehenden Nocken während der Drehung der Steuerscheibe in Gurtaufwickelrichtung in das Langloch hineinragt und dabei den Zapfen im Langloch fixiert, wobei in der Steuerscheibe zusätzlich ein in das Langloch übergehender Schlitz zur Führung und Aufnahme des Nockens während der Relativdrehung der Drehfeder zur Steuerscheibe ausgebildet ist. Das Dämpferbauteil besteht dabei vorzugsweise aus Kunststoff.

Hierbei kann weiterhin vorgesehen sein, dass dieses Dämpferbauteil zusätzlich den zentralen Lagerbereich der Drehfeder ausbildet und der andere als Drahtbiegeteil oder als Stanzbiegeteil ausgebildete Federarm der Drehfeder mit seinem den Lagerbereich des Dämpferbauteils umfassenden, gebogenen Abschnitt drehfest an dem Dämpferbauteil festgelegt ist.

Dabei kann zur Verbesserung der Funktion vorgesehen sein, dass an dem Dämpferbauteil zusätzlich ein zur Steuerscheibe hin abstehender Ansatz ausgebildet ist, der in der Gurtaufwickelrichtung den Anschlag an der Anschlagfläche des Mitnehmers ausbildet.

Soweit der Gurtaufroller zusätzlich zu dem gurtbandsensitiven Ansteuermechanismus auch mit einem fahrzeugsensitiven Ansteuermechanismus versehen ist, welcher aus einem fahrzeugsensitiven Sensor und einer an der Steuerscheibe eingerichteten Außenverzahnung besteht, kann im Funktionsablauf der Fall eintreten, dass zu Beginn einer Drehung der Gurtwelle mit Steuerscheibe in Gurtauszugsrichtung der von der Drehfeder gebildete Anschlag die Bewegung des Zapfens im Langloch der Steuerscheibe noch sperrt, so dass bei entsprechender Drehung der Gurtwelle in Gurtauszugsrichtung eine Blockierung der Gurtwelle durch das Sperrglied nicht herbeigeführt werden kann. Zur Vermeidung dieses zusätzlichen Problems kann nach einem Ausführungsbeispiel der Erfindung vorgesehen sein, dass der Gurtaufroller zur Ausbildung eines zusätzlichen fahrzeugsensitiven Ansteuermechanismus einen fahrzeugsensitiven Sensor und die Steuerscheibe eine Außenverzahnung zum Zusammenwirken mit dem fahrzeugsensitiven Sensor aufweist, wobei die Außenverzahnung der Steuerscheibe an der Steuerscheibe über einen vorgegebenen Drehwinkel verdrehbar angeordnet und gegen die Steuerscheibe mittels einer sich zwischen Außenverzahnung und Steuerscheibe abstützenden Feder in eine Ausgangsstellung vorgespannt ist. Hierbei kann der Verdrehwinkel der Verdrehwinkel zwischen Steuerscheibe und Außenverzahnung auf einen Betrag von 7,5 Grad bis 22,5 Grad ausgelegt sein. Insofern erfolgt im Fall eines Anhaltens der Steuerscheibe durch den fahrzeugsensitiven Sensor eine Relativdrehung zwischen der sich weiterdrehenden Gurtwelle und der stehenden Steuerscheibe, die zu einer Freigabe des Sperrgliedzapfens im Langloch führt.

In der Zeichnung sind Ausführungsbeispiele der Erfindung wiedergegeben, welche nachstehend beschrieben sind. Es zeigen:
- Fig. 1: die Steuerscheibe eines selbstsperrenden Gurtaufrollers mit daran schwenkbar angeordneter Trägheitsmasse einschließlich der Zuordnung der an einer nicht dargestellten Lagerplatte gehalterten und mit der Trägheitsmasse zusammenwirkenden Drehfeder einschließlich der Festlegung des Sperrgliedes an der Gurtwelle in einer Draufsicht auf die Steuerscheibe einschließlich Drehfeder in deren für die Gurtaufwickelrichtung geltenden Stellung,
- Fig. 2: den Gegenstand der Figur 1 in einer vergrößerten Darstellung des das Sperrglied festlegenden Federschenkels der Drehfeder,
- Fig. 3: den Gegenstand der Figur 1 in der für die Gurtauszugsrichtung der Gurtwelle geltenden Stellung der Drehfeder,
- Fig. 4: eine andere Ausführungsform der Erfindung mit einem als Bestandteil der Drehfeder ausgebildeten Dämpferbauteil in der entsprechend Figur 3 für die Gurtauszugsrichtung der Gurtwelle geltenden Stellung der Drehfeder,
- Fig. 5: den Gegenstand der Figur 4 in der für die Gurtaufwickelrichtung der Gurtwelle geltenden Stellung der Drehfeder,
- Fig. 6: die aus dem Dämpferbauteil und dem die Trägheitsmasse beaufschlagenden Federarm bestehende Drehfeder in Einzeldarstellungen ihrer Teile,
- Fig. 7: eine weitere Ausführungsform der Erfindung mit einer zweiteilig ausgebildeten Steuerscheibe in einer Figur 1 entsprechenden Funktionsstellung bei Angriff eines fahrzeugsensitiven Sensors an der Außenverzahnung der Steuerscheibe,
- Fig. 8: den Gegenstand der Figur 7 bei Weiterdrehung der Steuerscheibe in Gurtauszugsrichtung vor der Auslenkung des Sperrgliedzapfens im Langloch der Steuerscheibe,
- Fig. 9: den Gegenstand der Figur 8 bei einer weiteren Drehung der Steuerscheibe in Gurtauszugsrichtung bei in seine Blockierlage in dem Langloch der Steuerscheibe ausgelenkten Sperrgliedzapfen.

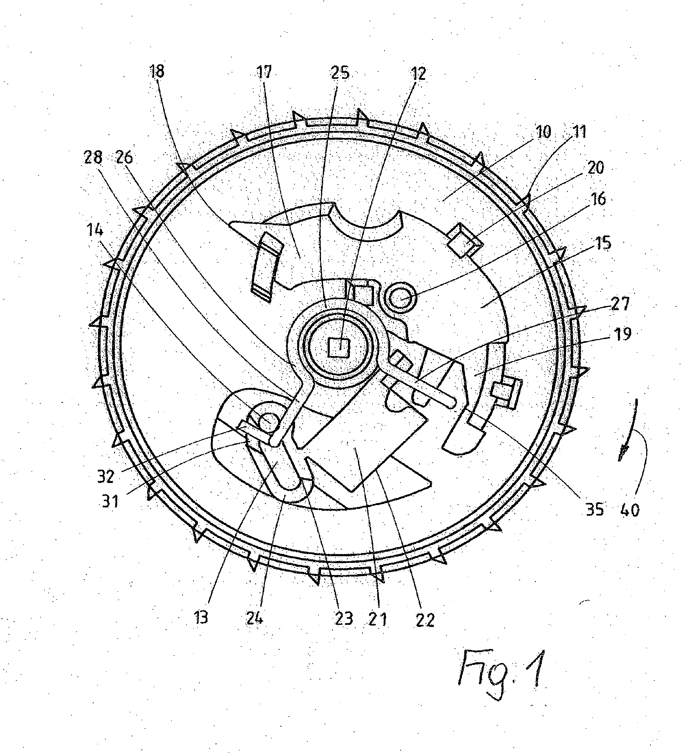

Die aus Figur 1 ersichtliche Steuerscheibe 10 ist auf einem Wellenfortsatz 12 drehbar gelagert und weist eine Außenverzahnung 11 zum Zusammenwirken mit einem fahrzeugsensitiven Steuersystem auf. In der Steuerscheibe 10 ist ein Langloch 13 ausgebildet, in welchem ein in Blickrichtung unter der Steuerscheibe 10 an der nicht weiter dargestellten Gurtwelle ausschwenkbar gelagerten Sperrglied angeordneter Zapfen 14 geführt ist. An der Steuerscheibe 10 ist weiterhin eine zweiarmige Trägheitsmasse 15 mittels einer in deren zentralen Bereich ausgebildeten Drehlagerung 16 schwenkbar gelagert, wobei die zweiarmige Trägheitsmasse einen Blockierarm 17 mit einer äußeren Blockierspitze 18 und einen Schwenkarm 19 aufweist. Die Trägheitsmasse 15 ist von an der Steuerscheibe 10 angebrachten und entsprechend gewinkelten Haltearmen 20 an der Steuerscheibe 10 gehalten, so dass die Trägheitsmasse 15 insbesondere bei ihrer gemeinsamen Drehung mit der Steuerscheibe 10 an derselben fixiert ist. Wie nicht weiter dargestellt, ist im Zusammenbau des selbstsperrenden Gurtaufrollers die topfförmige Ausnehmung der Steuerscheibe 10 von einer dagegen liegenden, nicht dargestellten Lagerplatte des Gurtaufrollers abgedeckt, wobei in der Lagerplatte eine entsprechende Lagerung für den Wellenfortsatz 12 ausgebildet ist. Weiterhin weist die Lagerplatte einen aufstehenden und in die topfförmige Ausnehmung der Steuerscheibe 10 hineinreichenden und mit einer Innenverzahnung versehenen umlaufenden Blockierrand auf, so dass sich die an der Steuerscheibe 10 schwenkbar gelagerte Trägheitsmasse 15 in ihrer in der Zeichnung nicht weiter dargestellten ausgeschwenkten Blockierstellung mit der Innenverzahnung der Lagerplatte verhakt; somit ist die Steuerscheibe 10 bei ihrer weiteren Drehbewegung angehalten. Hierbei kommt es dann bei einer Weiterdrehung der Gurtwelle zu einer Relativdrehung von Steuerscheibe 10 und Gurtwelle und damit zu einer Verschiebung des Zapfens 14 in dem Langloch 13, was wiederum zu einer Ausschwenkung des Sperrgliedes in eine am Gurtaufroller ausgebildete Blockierverzahnung führt. Die diesbezügliche Funktion des selbstsperrenden Gurtaufrollers ist beispielsweise in der DE 103 24 195 B4 mit weiterer Bezugnahme auf die DE 29 24 575 A1 oder die DE 39 26 370 A1 im Einzelnen beschrieben.

An der nicht dargestellten Lagerplatte ist eine Ω-artig ausgebildete Drehfeder 25 in Form einer Drahtbiegefeder mit einem zentralen, mit Radius versehenen Lagerbereich 26 drehbar gelagert, so dass sich die Drehfeder 25 unabhängig von den Drehbewegungen der Steuerscheibe 10 um ihre Lagerung an der Lagerplatte relativ zur Steuerscheibe drehen kann. Dabei ist die Lagerung der Drehfeder 25 an der Lagerplatte reibschlüssig derart ausgeführt, dass sich einerseits die Drehfeder 25 gemeinsam mit der Steuerscheibe 10 drehen kann, andererseits aber auch eine Funktionsphase möglich ist, in welcher die Drehfeder 25 gegenüber einer Drehung der Steuerscheibe 10 stehen bleibt und somit eine Relativdrehung zur Steuerscheibe ausführt. Die Ω-artige Drehfeder 25 weist zwei in Umfangsrichtung voneinander beabstandete Federarme 27, 28 auf, deren Funktion nachstehend beschrieben ist.

Damit die Drehfeder 25 die im Funktionsgeschehen des Gurtaufrollers vorgesehenen gemeinsamen Drehbewegungen mit der Steuerscheibe 10 ausführen kann, ist an der Steuerscheibe 10 ein zwischen den beiden Federschenkeln 27 und 28 gelegener Mitnehmer 21 derart angeordnet, dass der Mitnehmer 21 Anschlagflächen 22 und 23 für die beiden Federschenkel 27 und 28 der Drehfeder 25 ausbildet, so dass in jeder Drehrichtung der Steuerscheibe 10 ein Anschlag des Mitnehmers 21 mit dem zugeordneten Federschenkel der Drehfeder 25 zusammenwirkt und so die Drehfeder 25 in der jeweiligen Drehrichtung der Steuerscheibe 10 mitnimmt. Im Einzelnen ist der Mitnehmer 21 als sich in Umfangsrichtung der Steuerscheibe 10 zwischen den Federarmen 27 und 28 der Drehfeder 25 erstreckender rechteckiger Mitnehmerblock ausgebildet, wobei eine äußere Anschlagfläche 22 an einer äußeren Längsseite des Mitnehmerblocks wirksam ist, während eine innere Anschlagfläche 23 von dem Eckbereich einer kurzen Seite mit der zur Anschlagfläche 22 gegenüberliegenden Längsseite des rechteckigen Mitnehmerblocks gebildet ist. Weiterhin ist aus Gründen einer besseren Führung des über die Ebene der Steuerscheibe 10 hervorstehenden Zapfens 13 des Sperrgliedes das Langloch 14 von einem aufstehenden Rand 24 umgeben, der den Zapfen 13 mitführt.

Damit der Mitnehmer 21, der aufstehende Rand 24 wie auch die auf der Ebene der Steuerscheibe 10 angeordnete Trägheitsmasse 15 die vorgesehene und im einzelnen funktionell noch zu beschreibende Relativdrehung der Drehfelder 25 relativ zur Steuerscheibe 10 nicht behindern, ist die Drehfeder 25 an der Lagerplatte derart angeordnet, dass die Drehfeder 25 mit ihren beiden Federschenkeln 27, 28 einen Abstand zur Ebene der Steuerscheibe 10 einhält und somit die Federschenkel 27, 28 bei der Drehung der Drehfeder 25 gegenüber der Steuerscheibe 10 den Mitnehmer 21, den aufstehenden Rand 24 und den Zapfen 14 überfahren, wobei die freien Enden der beiden Federschenkel 27 und 28 jeweils einen in Richtung der Ebene der Steuerscheibe 10 umgebogenen Abschnitt 29 aufweisen und die umgebogenen Abschnitte 29 der Federarme 27 und 28 jeweils in die Ebene von Mitnehmer 21 und Trägheitsmasse 15 eintauchen und mit den vorgenannten Bauteilen zusammenwirken.

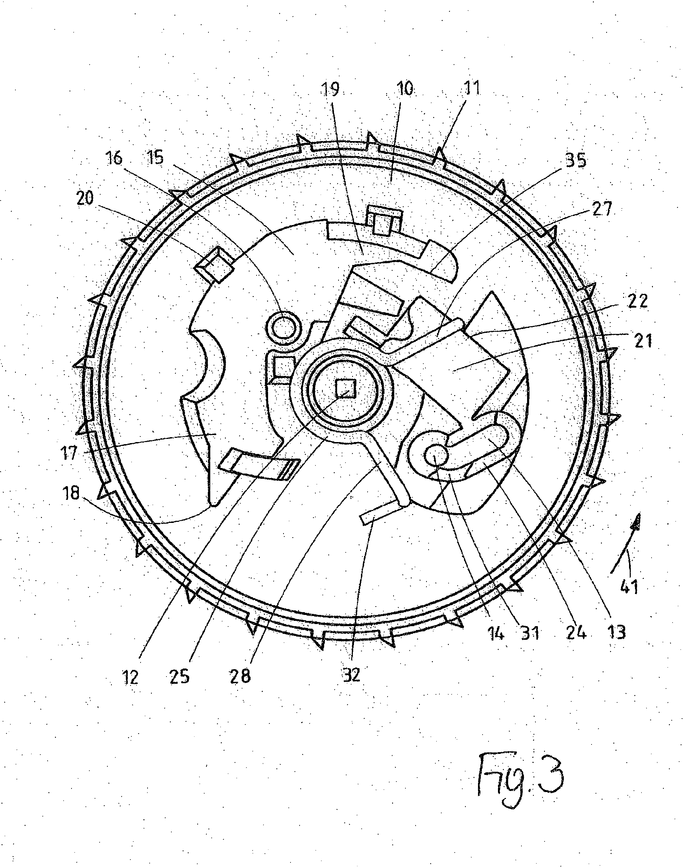

Wie sich aus einem Vergleich der Figuren 1 und 3 ergibt, ist der in der Darstellung gemäß Figuren 1 und 3 rechte Federschenkel 27 der Drehfeder 25 zum Zusammenwirken mit dem Schwenkarm 19 der Trägheitsmasse 15 eingerichtet. Hierzu weist der Schwenkarm 19 an seiner dem Federschenkel 27 bzw. dessen umgebogenen Abschnitt 29 zugewandten Innenseite eine Anlagefläche 35 für den umgebogenen Abschnitt 29 des Federschenkels 27 auf, wobei in der in Figur 1 dargestellten und die Stellung der Drehfeder 25 bei Drehung der Steuerscheibe 10 in Gurtaufwickelrichtung (Pfeil 40) dargestellten Stellung des Federschenkels 27 gegen die Anlagefläche 35 des Schwenkarms 19 steht und somit ein Ausschwenken des Blockierarms 17 nach außen verhindert. Wie nicht weiter dargestellt, kann sich der Federschenkel 27 so weit in Richtung des Schwenkarms 19 der Trägheitsmasse 15 erstrecken , dass der umgebogene Abschnitt 29 an der Anlagefläche 35 anliegt. In diesem Fall wird die Trägheitsmasse 15 in ihrer Ruhestellung während der Drehbewegungen der Steuerscheibe 10 so festgelegt, so dass die Trägheitsmasse 15 entklappert ist. Bei der entsprechenden Drehbewegung der Gurtwelle mit Steuerscheibe 10 in Aufwickelrichtung (Pfeil 40) verbleibt die Drehfeder 25 in der aus Figur 1 ersichtlichen Stellung, weil sie durch die Anlage der inneren Anschlagfläche 23 des Mitnehmers 21 gegen den umgebogenen Abschnitt 29 einschließlich eines an dessen Ende radial abstehenden, noch zu beschreibenden Fixierabschnitts des Federschenkels 28 der Drehfeder 25 mitgenommen wird. Kommt es somit am Ende der Aufwickelbewegung zu dem im Stand der Technik gemäß DE 103 24 125 B4 als technischer Hintergrund beschriebenen plötzlichen Stopp der Drehbewegung der Gurtwelle, so ist eine trägheitsbedingte Auslenkung der Trägheitsmasse 15 in deren Eingriffsstellung mit der Lagerplatte durch die Anlage des Federschenkels 27 der Drehfeder 25 gegen die Anlagefläche 35 der Trägheitsmasse 15 ausgeschlossen.

Wird nun bei vollständig oder beim Anlegevorgang teilweise auf der Gurtwelle des Gurtaufrollers aufgewickeltem Gurtband ausgehend von der in Figur 1 wiedergegebenen Anordnung von Steuerscheibe 10 und Drehfeder 25 die Gurtwelle mit Steuerscheibe 10 aufgrund eines Gurtbandauszuges in Auszugsrichtung (Pfeil 41) gedreht, wobei während der Drehung der Gurtwelle in Gurtauszugsrichtung die Funktion des gurtbandsensitiven Steuersystems sichergestellt und insoweit die Trägheitsmasse 15 frei schwenkbar sein muss, so bleibt die Drehfeder 25 aufgrund ihrer reibschlüssigen Lagerung an der Lagerplatte gegenüber der Drehung der Steuerscheibe 10 zurück, so dass sich zunächst eine Relativdrehung der Steuerseheibe 10 zur Drehfeder 25 vollzieht, bis die Anlagefläche 35 des Schwenkarms 19 der Trägheitsmasse 15 von dem Federschenkel 27 der Drehfeder 25 freigekommen ist und am Ende des Relativdrehweges der Steuerscheibe 10 zur Drehfeder 25 der umgebogene Abschnitt 29 des Federschenkels 27 in Anlage an der äußeren Anschlagfläche 22 des Mitnehmerblocks gelangt, so dass in dieser, nunmehr die Schwenkbewegung der Trägheitsmasse 15 ermöglichenden Federstellung die Drehfeder 25 bei den weiteren Drehbewegungen der Steuerscheibe 10 in Gurtauszugsrichtung (Pfeil 41) mitgenommen wird. Dies ist aus Figur 3 erkennbar.

Kommt es am Ende der Gurtauszugsbewegung zu einer Umschaltung der Drehbewegung der Gurtwelle in Gurtaufwickelrichtung (Pfeil 40), so kommt es wiederum zu einer Relativdrehung der Steuerscheibe 10 gegenüber der aufgrund deren reibschlüssigen Lagerung wiederum stehen bleibenden Drehfeder 25, so dass sich die Anlagefläche 35 der Trägheitsmasse 15 wiederum außen über den umgebogenen Abschnitt 29 des Federschenkels 27 schiebt und in dieser Stellung die Drehfeder 25 durch den Anschlag der inneren Anschlagfläche 23 des Mitnehmers 21 an dem Federschenkel 28 der Drehfeder 25 mitgenommen wird.

Um unerwünschte Klappergeräusche des Sperrgliedes gegenüber der Steuerscheibe 10 zu vermeiden, ist zusätzlich eine Fixierung des Zapfens 14 im Langloch 13 durch die Drehfeder 25 vorgesehen. Wie sich dazu aus Figuren 1 bis 3 ergibt, ist das Langloch 13 mit dem darin geführten Zapfen 14 des Sperrgliedes an der Steuerscheibe 10 räumlich so angeordnet bzw. orientiert, dass sich der Federschenkel 28 der Drehfeder 25 über das Langloch 13 erstreckt. Im Einzelnen ist vorgesehen, dass der umgebogene Abschnitt 29 des Federschenkels 28 einen in Umfangsrichtung der Steuerscheibe 10 abgebogenen Fixierabschnitt 32 aufweist, mit welchem der umgebogene Abschnitt 29 des Federschenkels 28 in den von dem das Langloch 13 umschließenden Rand 24 umgebenden Raum eintaucht und den in der Aufwickelrichtung (Pfeil 40) der Gurtwelle an der Innenseite des Langloches 13 liegenden Zapfen 14 in dieser Lage festlegt und ein radiales Ausschwenken in dem Langloch 13 verhindert. Insoweit weist der das Langloch 13 umschließende Rand 24 einen Durchbruch 31 zum Durchtritt des freien Endes des Fixierabschnitts 32 auf. Weiterhin versteht es sich, dass aufgrund des Eintauchens des umgebogenen Endes 29 mit Fixierabschnitt 32 in das Langloch 13 die innere Anschlagfläche 23 für die Mitnahme der Drehfeder 25 in Gurtaufwickelrichtung (Pfeil 40) von dem aufstehenden Rand 24 gebildet wird, wobei der Mitnehmerblock in diesem Bereich in den Rand 24 übergeht.

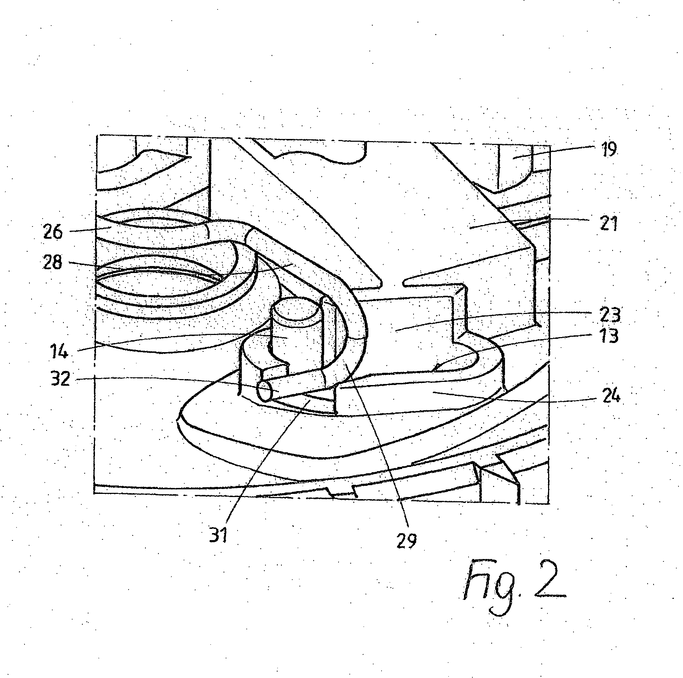

Die im Einzelnen aus Figuren 1 und 2 ersichtliche Stellung der Drehfeder 25 bzw. die Lage von deren zur Fixierung des Zapfens 14 im Langloch 13 herangezogenen Federschenkels 28 mit Fixierabschnitt 32 entspricht der Stellung der Drehfelder 25 bei Drehung der Steuerscheibe 10 in Aufwickelrichtung (Pfeil 40). Demgegenüber ist in Figur 3 die Stellung der Drehfeder 25 bei Drehung der Gurtwelle in Gurtauszugsrichtung (Pfeil 41) dargestellt, wobei der Federarm 28 aufgrund der Relativdrehung der Steuerscheibe 10 zur Drehfelder 25 aus dem Bereich des Langloches 13 herausgeschwenkt ist, so dass bei Drehung der Gurtwelle in Gurtauszugsrichtung die gewünschte Verschiebung des Zapfens 14 in dem Langloch 13 radial nach außen ermöglicht ist. Dabei hat der im Rand 24 vorgesehene Durchbruch 31 den Weg für die Bewegung des Fixierabschnitts 32 mit umgebogenem Abschnitt 29 freigemacht bzw. ermöglicht bei einer Rückdrehung der Drehfeder 25 in ihre für die Gurtaufwickelrichtung (Figuren 1, 2) geltende Stellung ein Eintreten des Federschenkels 28 in das Langloch 13.

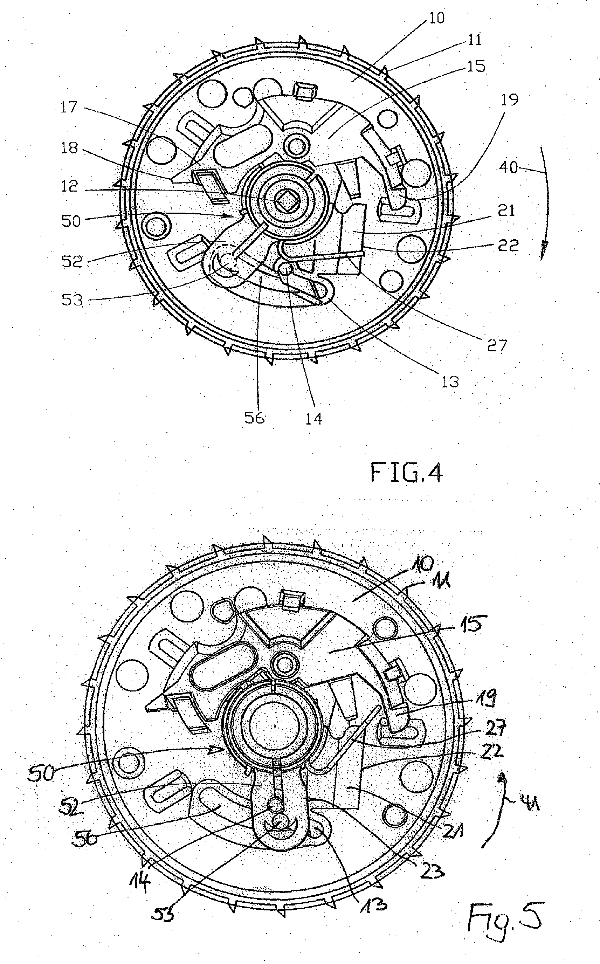

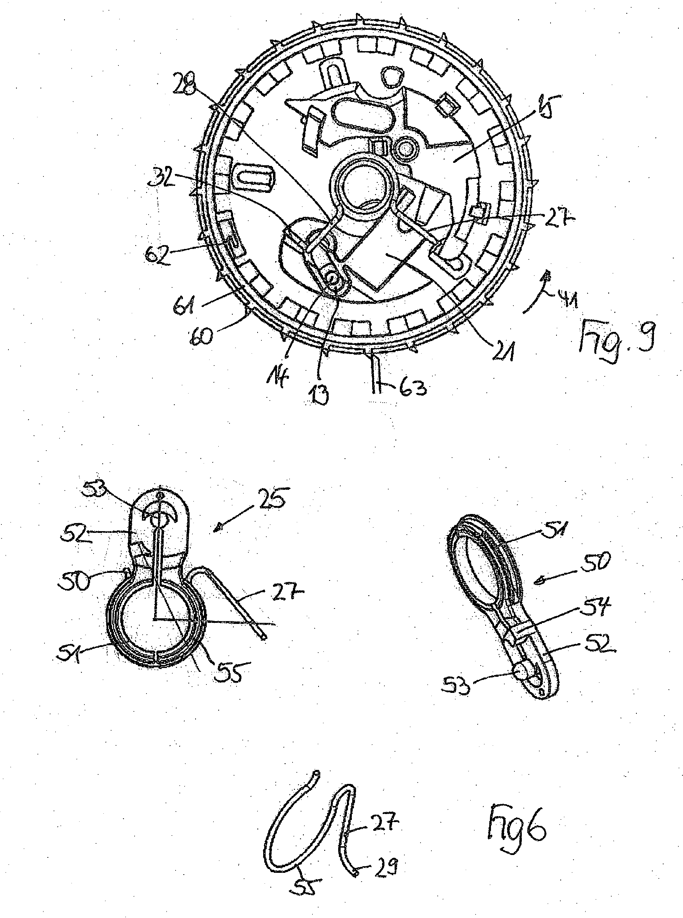

Das in den Figuren 4 bis 6 dargestellte Ausführungsbeispiel unterscheidet sich von dem zuvor beschriebenen Ausführungsbeispiel dadurch, dass die Drehfeder 25 eine besondere Form aufweist. Wie sich dazu zunächst aus Figur 6 ergibt, besteht die Drehfeder 25 aus dem vorzugsweise aus Kunststoff bestehenden Dämpferbauteil 50, welches an einem Ende einen dem Lagerbereich 26 bei dem zu Figuren 1 bis 3 beschriebenen Ausführungsbeispiel entsprechenden Lagerbereich 51 ausbildet. An dem Lagerbereich 51 schließt ein gestreckter Arm 52 an, der insoweit dem Federschenkel 28 bei dem in Figuren 1 bis 3 dargestellten Ausführungsbeispiel entspricht. Auf den Lagerbereich 51 des Dämpferbauteils 50 ist der als Drahtbiegeteil ausgebildete Federschenkel 27 einschließlich eines ausgeformten gebogenen Abschnitts 55 derart aufgesetzt, dass der Federschenkel 27 eine feste Lage zu dem Arm 52 des Dämpferbauteils 50 einnimmt. Insofern ergibt sich aus dem Dämpferbauteil 50 und dem Federschenkel 27 gemeinsam die Ω-Form der Drehfeder 25. An dem Arm 52 sind ferner ein davon abstehender Nocken 53 sowie ein Ansatz 54 ausgebildet.

Wie sich aus der den Zustand bei sich in Gurtaufwickelrichtung drehender Gurtwelle darstellenden Figur 4 ergibt, ist das Dämpferbauteil 50 mit seinem Lagerbereich 51 derart auf die Lagerung der Steuerscheibe 10 aufgesetzt, dass der von dem Arm 52 in Richtung der Steuerscheibe 10 abstehende Nocken 53 in einem von dem Langloch 13 der Steuerscheibe 10 abgehenden bzw. in dieses übergehenden Schlitz 56 liegt, wobei gleichzeitig der Federschenkel 27 sich in seiner Freigabestellung für die Trägheitsmasse 15 befindet, wie zu Figur 3 beschrieben. Somit kann die gurtbandsensitive Ansteuerung des Sperrgliedes wirksam werden, weil die Trägheitsmasse 15 bei entsprechender Drehbeschleunigung der Steuerscheibe 10 ausschwenken und die Relativdrehung zwischen Steuerscheibe 10 und Gurtwelle einleiten kann, während gleichzeitig das Langloch 13 für die Bewegung des Sperrgliedzapfens 14 frei ist, so dass das Sperrglied radial in seine Blockierstellung hinausgeführt werden kann.

Entsprechend Figur 5 ergibt sich für die Gurtaufwickelrichtung (Pfeil 41) die Situation, die bereits zur dem Ausführungsbeispiel gemäß Figuren 1 bis 3 ausführlich beschrieben ist, bei welcher nämlich durch eine Relativdrehung der Drehfeder 25 zur Steuerscheibe 10 der Federschenkel 27 der Drehfeder 25 in eine Blockierstellung für die Trägheitsmasse 15 gebracht ist. Gleichzeitig damit ist der Nocken 53 des Dämpferbauteils 50 in dem Schlitz 56 durch Verschwenkung des Dämpferbauteils 50 bis zum wenigstens teilweisen Eintritt in das Langloch 13 verschoben, so dass der Nocken 53 des Dämpferbauteils 50 den Zapfen 14 des Sperrglieds am diesbezüglichen Ende des Langloches 13 festlegt und dadurch fixiert.

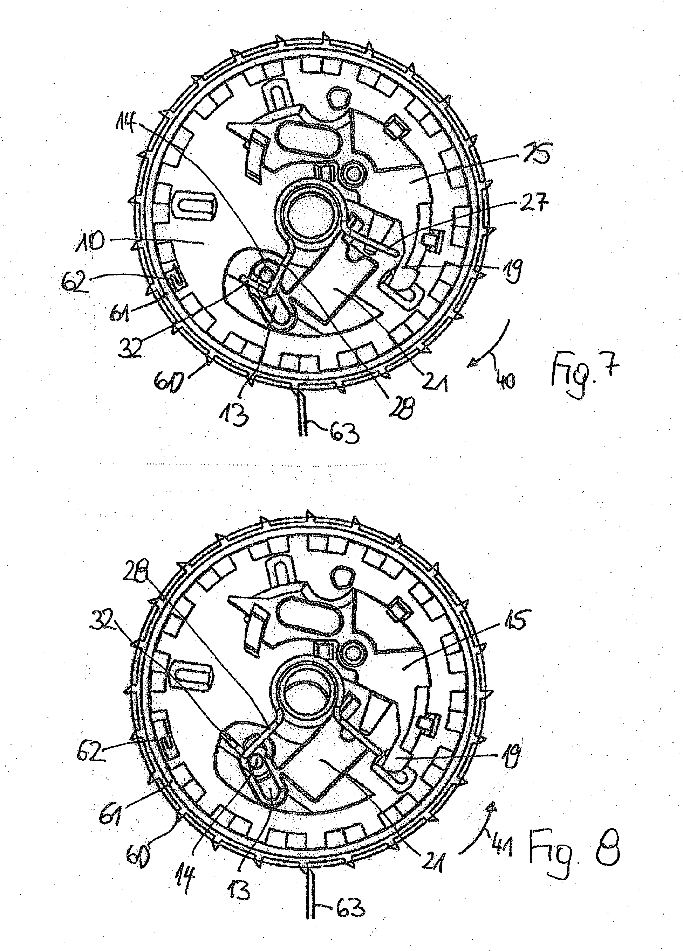

In den Figuren 7 bis 9 ist eine weitere Ausgestaltung des zuvor beschriebenen selbstsperrenden Gurtaufrollers mit Blick auf die Anordnung eines fahrzeugsensitiven Ansteuermechanismus dargestellt. Soweit hierzu die Steuerscheibe 10 mit einer Außenverzahnung 60 versehen ist, der ein Fahrzeugsensor zum Festlegen der Steuerscheibe 10 und dadurch zum Herbeiführen einer Relativbewegung zwischen Steuerscheibe 10 und der sich weiterdrehenden Gurtwelle zugeordnet ist, ist bei dem in Figuren 4 bis 6 dargestellten Ausführungsbeispiel die Steuerscheibe 10 zweiteilig ausgeführt, indem die Außenverzahnung 60 Bestandteil eines an der Steuerscheibe 10 angeordneten, gegenüber der Steuerscheibe 10 relativ verdrehbaren Ringes 61 ist. Zwischen der Steuerscheibe 10 und dem Ring 61 ist eine Feder 62 angeordnet, die den Ring 61 in einer vorbestimmten Lage zur Steuerscheibe 10 hält, jedoch eine Relativdrehung des Rings 61 zur Steuerscheibe 10 ermöglicht.

Hierbei ist in Figur 7 zunächst die der Figur 1 entsprechende Situation dargestellt, bei welcher sich die Drehfeder 25 in der für die Gurtaufwickelrichtung geltenden Stellung befindet, in welcher die Drehfeder 25 einerseits die Bewegung der Trägheitsmasse 15 blockiert und andererseits den Zapfen 14 im Langloch 13 festlegt. In Figur 7 ist nun angedeutet, dass ein außenliegender Hebel 63 eines Fahrzeugsensors in Anlage an der Außenverzahnung 60 steht und dadurch eine Drehung der Steuerscheibe 10 blockiert.

Kommt es nun entsprechend Figur 8 zu einer Drehung der Gurtwelle in Gurtauszugsrichtung (Pfeil 41), so kommt es im Falle der Einleitung des Blockiervorganges durch den fahrzeugsensitiven Ansteuermechanismus bei durch den Hebel 63 des Fahrzeugsensors festgelegtem Ring 61 mit Außenverzahnung 60 zunächst zu einer Relativverdrehung der an die Gurtwelle gekoppelten Steuerscheibe 10 zu dem durch den Hebel 63 festgelegten Ring 61, die dazu führt, dass durch die beschriebene Verdrehung der Drehfeder 25 deren Federarm 28 in eine den Zapfen 14 im Langloch 13 freigebende Lage verschwenkt ist, wie aus Figur 8 ersichtlich. Kommt es im weiteren Verlauf des Blockiervorganges zu der für die Auslenkung des Sperrgliedes in seine Blockierstellung erforderlichen Relativdrehung zwischen Gurtwelle und der nach Ausschöpfen des federbedingten Bewegungsweges zwischen Ring 61 und Steuerscheibe 10 weiter in Stillstand gehaltenen Steuerscheibe 10, so wird das Sperrglied durch die freigegebene Bewegung des Zapfens 14 im Langloch 13 der Steuerscheibe 10 nach außen in seine Blockierstellung ausgelenkt, wie abschließend in Figur 9 dargestellt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihrer verschiedenen Ausführungsformen wesentlich sein.

## Patentansprüche

1. Selbstsperrender Gurtaufroller für Sicherheitsgurte mit einer drehbar in einem Gehäuserahmen gelagerten und in Aufwickelrichtung des Gurtbandes von einer Aufwickelfeder vorgespannten Gurtwelle und mit wenigstens einem gurtbandsensitiven Ansteuermechanismus, der eine an die Gurtwelle gekoppelte Steuerscheibe (10) zur Aussteuerung eines an der Gurtwelle angeordneten und bei Relativdrehung zwischen Gurtwelle und Steuerscheibe (10) bis zum Eingriff in eine Gehäuseverzahnung gegen Federwirkung auslenkbaren Sperrgliedes aufweist und das Sperrglied mittels eines in ein in der Steuerscheibe (10) ausgebildetes Langloch (13) eingreifenden und darin während der Relativdrehung zwischen Steuerscheibe (10) und Gurtwelle geführten Zapfens (14) an die Steuerscheibe (10) gekoppelt ist, wobei die Steuerscheibe (10) eine exzentrisch an der Steuerscheibe (10) schwenkbar gelagerte und gegen die Wirkung einer Rückstellfeder radial ausschwenktbare, zweiarmige Trägheitsmasse (15) trägt, die im Auslösefall aufgrund der auf die Steuerscheibe (10) einwirkenden Drehbeschleunigung mit ihrem einen Blockierarm (17) radial bis zum Eingriff in eine ortsfeste Verzahnung ausschwenkt und dadurch die Steuerscheibe (10) in deren Drehbewegung anhält und festlegt, und wobei an einer Lagerstelle für die Gurtwelle und/oder die Steuerscheibe (10) eine zwei in Umfangsrichtung voneinander beabstandet angeordnete Federschenkel (27, 28) aufweisende Drehfeder (25) mittels einer reibschlüssigen Lagerung relativ zur Steuerscheibe (10) zwischen einer Ablagestellung an der Trägheitsmasse (15) und einer Anlagestellung an einem von der Ebene der Steuerscheibe (10) aufstehenden Mitnehmer (21) drehbar gelagert ist, **dadurch gekennzeichnet, dass** die beiden Federschenkeln (27; 28, 50) der in einer oberhalb der Trägheitsmasse (15) und mit Abstand zur Ebene der Steuerscheibe (10) gelegenen Ebene angeordneten Drehfeder (25) den Mitnehmer (21) zwischen sich einfassen und mit in die Ebene der Steuerscheibe (10) reichenden Anschlägen (29, 53) übergreifen, wobei der Mitnehmer (21) Anschlagsflächen (22, 23) für die Federschenkel (27; 28, 50) zur Mitnahme der Drehfeder (25) bei der Drehung der Steuerscheibe (10) sowohl in Gurtaufwickelrichtung (Pfeil 40) als auch in Gurtauszugsrichtung (Pfeil 41) ausgebildet derart, dass die Drehfeder (25) bei Drehung der Steuerscheibe (10) in Gurtauszugsrichtung (Pfeil 41) die Trägheitsmasse (15) freigibt und bei Drehung der Steuerscheibe (10) in Gurtaufwickelrichtung (Pfeil 40) die Trägheitsmasse (15) an einem Ausschwenken hindert, und dass ferner der der Mitnahme der Drehfeder (25) in Gurtaufwickelrichtung (40) dienende Federschenkel (28, 50) mit seinem Anschlag (29, 53) während der Drehung der Steuerscheide (10) in Gurtaufwickelrichtung (40) in den Bewegungsweg des Zapfens (14) in dem Langloch (13) reicht und dadurch das Sperrglied an der Gurtwelle fixiert.

2. Selbstsperrender Gurtaufroller nach Anspruch 1, **dadurch gekennzeichnet, dass** der am Federschenkel (28) der Drehfeder (25) ausgebildete Anschlag (29) aus einem an einem zur Steuerscheibe (10) umgebogenen Abschnitt in Umfangsrichtung der Steuerscheibe (10) abgebogenen Fixierabschnitt (32) besteht, der während der Drehung der Steuerscheibe (10) in Gurtaufwickelrichtung (Pfeil 40) an dem die Ebene der Steuerscheibe (10) überragenden Ende des Zapfens (14) anliegt.

3. Selbstsperrender Gurtaufroller nach Anspruch 1 oder 2, **dadurch gekennzeichnet, dass** das in der Steuerscheibe (10) ausgebildete Langloch (13) von einem über die Ebene der Steuerscheibe (10) hervorstehenden umlaufenden und das die Ebene der Steuerscheibe (10) überragende Ende des Zapfens (14) führenden Rand (24) umschlossen ist, dessen Höhe die Höhle des an der Steuerscheibe (10) angeordneten Mitnehmers (21) nicht überragt.

4. Selbstsperrender Gurtaufroller nach einem der Ansprüche 1 bis 3, **dadurch gekennzeichnet, dass** der umgebogene Abschnitt des zur Fixierung des Sperrgliedes eingerichteten Federschenkels (28) einschließlich des daran ausgebildeten Fixierabschnitts (32) in den von dem das Langloch (13) umschließenden Rand (24) umgebenen Raum eintaucht und der Rand (24) einen Durchbruch (31) zum Durchbruch des freien Endes des Fixierabschnittes (32) aufweist.

5. Selbstsperrender Gurtaufroller nach Anspruch 1 oder 3, **dadurch gekennzeichnet, dass** der mit dem Zapfen (14) zusammenwirkende Federschenkel von einem gesonderten, einen Bestandteil der Drehfeder (25) bildenden Dämpferbauteil (50) gebildet ist, welches mit einem von ihm zur Steuerscheibe (10) hin abstehenden Nocken (53) während der Drehung der Steuerscheibe (10) in Gurtaufwickelrichtung (Pfeil 40) in das Langloch (13) hineinragt und dabei den Zapfen (14) im Langloch (13) fixiert, wobei in der Steuerscheibe (10) zusätzlich ein in das Langloch (13) übergehender Schlitz (56) zur Führung und Aufnahme des Nockens (53) während der Relativdrehung der Drehfeder (25) zur Steuerscheibe (10) ausgebildet ist.

6. Selbstsperrender Gurtallfroller nach Anspruch 5, **dadurch gekennzeichnet, dass** das Dämpferbauteil (50) zusätzlich den zentralen Lagerbereich (51) der Drehfeder (25) ausbildet und der andere als Drahtbiegeteil oder als Stanzbiegeteil ausgebildete Federarm (27) der Drehfelder (25) mit seinem den Lagerbereich (51) des Dämpferbauteils (50) umfassenden, gebogenen Abschnitt (55) drehfest an dem Dämpferbauteil (50) festgelegt ist.

7. Selbstsperrender Gurtaufroller nach Anspruch 5 oder 6, **dadurch gekennzeichnet, dass** an dem Dämpferbauteil (50) zusätzlich ein zur Steuerscheibe (10) hin abstehender Ansatz (54) ausgebildet ist, der in der Gurtaufwickelrichtung (Pfeil 40) den Anschlag an der Anschlagfläche (23) des Mitnehmers (21) ausbildet.

8. Selbstsperrender Gurtaufroller nach einem der Ansprüche 1 bis 7, bei welchem der Gurtaufroller zur Ausbildung eines zusätzlichen fahrzeugsensitiven Ansteuermechanismus einen fahrzeugsensitiven Sensor und die Steuerscheibe (10) eine Außenverzahnung (60) zum Zusammenwirken mit dem fahrzeugsensitiven Sensor aufweist, **dadurch gekennzeichnet, dass** die Außenverzahnung (60) der Steuerscheibe (10) an der Steuerscheibe (10) über einen vorgegebenen Drehwinkel verdrehbar angeordnet und gegen die Steuerscheibe (10) mittels einer sich zwischen Außenverzahnung (60) und Steuerscheibe (10) abstützenden Feder (62) in eine Ausgangsstellung vorbespannt ist.

9. Selbstsperrender Gurtaufroller nach Anspruch 8, **dadurch gekennzeichnet, dass** der Verdrehwinkel zwischen Steuerscheibe (10) und Außenverzahnung (60) auf einen Betrag von 7,5 Grad bis 22,5 Grad ausgelegt ist.

## Claims

1. A self-locking belt retractor for seatbelts including a belt shaft, which belt shaft is rotatably supported in a housing frame and pre-tensioned by a winding spring in the direction of retraction of the belt strap, and at least one belt strapsensitive drive mechanism that includes a control disc (10), which control disc (10) is coupled to the belt shaft, for controlling a blocking element disposed on the belt shaft, which blocking element is deflectable against a spring effect upon relative rotation between belt shaft and control disc (10) until the engaging in a housing gearing and the blocking element is coupled to the control disc (10) by a pin (14), which pin (14) engages in a slot (13) formed in the control disc (10), such that during the relative rotation between control disc (10) and belt shaft and when the pin (14) is guided in the slot (13), it is coupled to the control disc (10), wherein the control disc (10) supports a two-armed inertial mass (15) eccentrically pivotable on the control disc (10) and radially pivotable against the effect of a return spring, which inertial mass (15) upon activation radially pivots, due to the rotational acceleration acting on the control disc (10), with its one blocking arm (17) until engagement in a positionally fixed gearing, and thereby retaining and setting the control disc (10) in its rotational movement, and wherein a torsion spring (25), which is located at a bearing position for the belt shaft and/or the control disc (10) and includes two spring legs (27, 28) disposed circumferentially distanced from each other, is rotatably supported using a frictionally bonded bearing relative to the control disc (10) between a contact position on the inertial mass (15) and a contact position on a carrier (21) projecting from the plane of the control disc (10), **characterised in that** both of the spring legs (27; 28, 50) of the torsion spring (25) disposed in the plane above the inertial mass (25) and distanced to the plane of the control disc (10) enclose between themselves and overlap with the abutment surfaces (22, 23) extending into the plane of the control disc (10), wherein the carrier (21) forms abutment surfaces (22, 23) for the spring legs (27; 28, 50) for carrying the torsion spring (25) upon the rotation of the control disc (10) both in the direction of retraction of the belt (arrow 40) and in the direction of extension of the belt (arrow 41) such that upon rotation of the control disc (10) in the direction of extension of the belt, the torsion spring (25) releases the inertial mass (15), and upon rotation of the control disc (10) in the direction of retraction of the belt (40), the torsion spring (25) prevents an outward swinging of the inertial mass (15), and **in that** further the spring legs (28, 50) serving for the carrying of the torsion spring (25) in the direction of retraction of the belt (40) extends with its abutment surface (29, 53) into the movement path of the pin (14) in the slot (13) during the rotation of the control disc (10) in the direction of retraction of the belt (40), thereby fixing the blocking element to the belt shaft.

2. The self-locking belt retractor according to claim 1, **characterised in that** an abutment (29) formed on the spring leg (28) of the torsion spring (25) is comprised of a fixing section (32) bent on a section curved to the control disc (10) in the circumferential direction of the control disc (10), which fixing section (32) abuts on the end of the pin (14) overlapping the plane of the control disc (10) during the rotation of the control disc (10) in the direction of retraction of the belt (arrow 40).

3. The self-locking belt retractor according to one of claims 1 or 2, **characterised in that** the slot (13) formed in the control disc (10) is surrounded by an edge (24) that circumferentially projects over the plane of the control disc (10) and guides the end of the pin (14) that overlaps the plane of the control disc (10), the height of which edge (24) does not overlap the height of the carrier (21) disposed on the control disc (10).

4. The self-locking belt retractor according to one of claims 1 or 3, **characterised in that** the bent section of the spring leg (28), including the fixing section (32) formed thereon, furnished for the fixing of the blocking element dips into the space surrounding the edge (24) enclosing the slot (13) and the edge (24) includes a breakthrough (31) for the breaking through of the free end of the fixation section (32).

5. The self-locking belt retractor according to claim 1 or 3, **characterised in that** the spring leg cooperating with the pin (14) is formed from a separate, damping component (50) forming a component for the torsion spring (25), which damping component (50) that extends with a cam (53), which cam (53) protrudes from the damping component (50) up to the control disc (10), into the slot (13) during the rotation of the control disc (10) and so fixes the pin (14) in the slot (13), wherein a slit (56) merging into the slot (13) is additionally formed in the control disc (10), which slit (56) is for the guiding and receiving of the cam (53) during the relative rotation of the torsion spring (25) to the control disc (10).

6. The self-locking belt retractor according to claim 5, **characterised in that** the damping component (50) additionally forms the central bearing region (51) of the torsion spring (25) and the other spring arm (27), which is configured as a bent-wire part of as a stamped-bent part, is set with its curved section (55), which section (55) that comprises the bearing region (55) of the damping component (51), on the damping component (50) in a manner fixed with respect to rotation.

7. The self-locking belt retractor according to claim 5 or 6, **characterised in that** a projection (54) is additionally formed on the damping component (50) projecting toward the control disc (10), which projection (54) forms the abutment on the abutment surface (23) of the carrier (21) in the direction of retraction of the belt (arrow 40).

8. The self-locking belt retractor according to one of claims 1 to 7, in which the belt retractor includes a vehicle-sensitive sensor for the formation of an additional vehicle-sensitive drive mechanism and the control disc (10) includes an outer gearing (60) for the cooperation with the vehicle-sensitive sensor, **characterised in that** the outer gearing (60) of the control disc (10) is disposed rotatable about a pre-determined angle of rotation on the control disc (10) and is pre-tensioned in a starting position against the control disc (10) by a spring (52) supported between the out gearing (60) and the control disc (10).

9. The self-locking belt retractor according to claim 8, **characterised in that** the angle of rotation between the control disc (10) and the outer gearing (60) is designed between 7.5° and 22.5°.

## Revendications

1. Enrouleur de ceinture autobloquant pour ceintures de sécurité comprenant un arbre de ceinture monté rotatif dans un cadre de boîtier et précontraint dans le sens d'enroulement de la sangle de ceinture par un ressort d'enroulement et comprenant au moins un mécanisme de commande sensible à la sangle de ceinture, qui comporte un disque de commande (10) couplé à l'arbre de ceinture destiné au réglage d'un organe de verrouillage disposé sur l'arbre de ceinture et pouvant être dévié contre l'action d'un ressort jusqu'à la prise dans une denture de boîtier lors d'une rotation relative entre l'arbre de ceinture et le disque de commande (10) et l'organe de verrouillage étant couplé au disque de commande (10) au moyen d'un tenon (14) en prise dans un trou oblong (13) formé dans le disque de commande (10) et guidé dans celui-ci pendant la rotation relative entre le disque de commande (10) et l'arbre de ceinture, le disque de commande (10) portant une masse d'inertie (15) à deux bras montée pivotante de manière excentrique sur le disque de commande (10) et pouvant être basculée radialement contre l'action d'un ressort de rappel, laquelle, en cas de déclenchement, bascule en raison de l'accélération de rotation agissant sur le disque de commande (10) radialement avec son bras de blocage (17) jusqu'à la prise dans une denture fixe et arrête et bloque ainsi le mouvement de rotation du disque de commande (10), et un ressort de torsion (25) comportant deux branches de ressort (27, 28) disposées espacées l'une de l'autre dans le sens circonférentiel étant monté sur un point d'appui pour l'arbre de ceinture et/ou le disque de commande (10), rotatif par rapport au disque de commande (10) entre une position d'appui contre la masse d'inertie (15) et une position d'appui contre un élément d'entraînement (21) sortant du plan du disque de commande (10) au moyen d'un logement par friction, **caractérisé en ce que** les deux branches de ressort (27 ; 28, 50) du ressort de torsion (25) disposé dans un plan situé au-dessus de la masse d'inertie (15) et à distance du plan du disque de commande (10) encadrent entre elles l'élément d'entraînement (21) et le chevauchent avec des butées (29, 53) qui s'étendent dans le plan du disque de commande (10), l'élément d'entraînement (21) formant des surfaces de butée (22, 23) pour les branches de ressort (27 ; 28, 50) afin d'entraîner le ressort de torsion (25) lors de la rotation du disque de commande (10) aussi bien dans le sens d'enroulement de la ceinture (flèche 40) que dans le sens de déroulement de la ceinture (flèche 41) de telle manière que le ressort de torsion (25) libère la masse d'inertie (15) lors de la rotation du disque de commande (10) dans le sens de déroulement de la ceinture (flèche 41) et empêche un basculement de la masse d'inertie (15) lors d'une rotation du disque de commande (10) dans le sens d'enroulement de la ceinture (flèche 40), et qu'en outre la branche de ressort (28, 50) servant à entraîner le ressort de torsion (25) dans le sens d'enroulement de la ceinture (40) s'étend avec sa butée (29, 53) dans la course de déplacement du tenon (14) dans le trou oblong (13) pendant la rotation du disque de commande (10) dans le sens d'enroulement de la ceinture (40) et immobilise ainsi l'organe de verrouillage sur l'arbre de ceinture.

2. Enrouleur de ceinture autobloquant selon la revendication 1, **caractérisé en ce que** la butée (29) formée sur la branche de ressort (28) du ressort de torsion (25) est composée d'une section d'immobilisation (32) pliée dans le sens circonférentiel du disque de commande (10) sur une section recourbée vers le disque de commande (10), laquelle section d'immobilisation appuie contre l'extrémité du tenon (14) dépassant le plan du disque de commande (10) pendant la rotation du disque de commande (10) dans le sens d'enroulement de la ceinture (flèche 40).

3. Enrouleur de ceinture autobloquant selon la revendication 1 ou 2, **caractérisé en ce que** le trou oblong (13) formé dans le disque de commande (10) est encerclé par un bord (24) périphérique faisant saillie au-dessus du plan du disque de commande (10) et guidant l'extrémité du tenon (14) dépassant du plan du disque de commande (10), la hauteur du bord ne dépassant pas la hauteur de l'élément d'entraînement (21) disposé sur le disque de commande (10).

4. Enrouleur de ceinture autobloquant selon l'une des revendications 1 à 3, **caractérisé en ce que** la section recourbée de la branche de ressort (28) configurée pour l'immobilisation de l'organe de verrouillage y compris la section d'immobilisation (32) formée sur celle-ci s'enfonce dans l'espace entouré par le bord (24) encerclant le trou oblong (13) et le bord (24) comporte une brèche (31) pour le passage de l'extrémité libre de la section d'immobilisation (32).

5. Enrouleur de ceinture autobloquant selon la revendication 1 ou 3, **caractérisé en ce que** la branche de ressort coopérant avec le tenon (14) est formée par un composant d'amortissement (50) séparé formant une partie du ressort de torsion (25), qui dépasse dans le trou oblong (13) avec un ergot (53) dépassant de lui-même vers le disque de commande (10) pendant la rotation du disque de commande (10) dans le sens d'enroulement de la ceinture (flèche 40) et qui immobilise ainsi le tenon (14) dans le trou oblong (13), une fente (56) se prolongeant dans le trou oblong (13) étant formée en plus dans le disque de commande (10) pour guider et recevoir l'ergot (53) pendant la rotation relative du ressort de torsion (25) par rapport au disque de commande (10).

6. Enrouleur de ceinture autobloquant selon la revendication 5, **caractérisé en ce que** le composant d'amortissement (50) forme en plus la zone de logement (51) centrale du ressort de torsion (25) et l'autre bras de ressort (27) du ressort de torsion (25) formé en tant que pièce de fil plié ou en tant que pièce estampée pliée est bloqué sans pouvoir tourner sur le composant d'amortissement (50) avec sa section (55) courbée encerclant la zone de logement (51) du composant d'amortissement (50).

7. Enrouleur de ceinture autobloquant selon la revendication 5 ou 6, **caractérisé en ce qu'**une saillie (54) dépassant vers le disque de commande (10) est formée en plus sur le composant d'amortissement (50), laquelle saillie forme la butée sur la surface de butée (23) de l'élément d'entraînement (21) dans le sens d'enroulement de la ceinture (flèche 40).

8. Enrouleur de ceinture autobloquant selon l'une des revendications 1 à 7, dans lequel, pour former un mécanisme supplémentaire de commande sensible au véhicule, l'enrouleur de ceinture comporte un capteur sensible au véhicule et le disque de commande (10) comporte une denture extérieure (60) pour coopérer avec le capteur sensible au véhicule, **caractérisé en ce que** la denture extérieure (60) du disque de commande (10) est disposée rotative sur le disque de commande (10) sur un angle de rotation prédéterminé et est précontrainte dans une position de départ contre le disque de commande (10) au moyen d'un ressort (62) en appui entre la denture extérieure (60) et le disque de commande (10).

9. Enrouleur de ceinture autobloquant selon la revendication 8, **caractérisé en ce que** l'angle de rotation entre le disque de commande (10) et la denture extérieure (60) est conçu pour avoir une valeur de 7,5 degrés à 22,5 degrés.
